# EUROPEAN PATENT SPECIFICATION

(11) **EP 3 887 173 B1**
(45) Date of publication and mention of the grant of the patent: **13.08.2025**
(21) Application number: 19833005.2
(22) Date of filing: 26.11.2019
(51) Int. Cl.: B60C 1/00, C08L 9/00, C08L 23/22, C08L 23/28

(54) **TIRE INNER LINER**
REIFENINNENAUSKLEIDUNG
DOUBLURE INTERNE DE PNEU

(30) Priority: 29.11.2018 US 201862772712 P
(43) Date of publication of application: 06.10.2021
(73) Proprietor: COMPAGNIE GENERALE DES ETABLISSEMENTS MICHELIN, 63000 Clermont-Ferrand (FR)
(72) Inventor: LIN, Tingdong, Greenville, South Carolina 29605 (US)
(74) Representative: Casalonga
(86) International application number: PCT/US2019/063407
(87) International publication number: WO 2020/112874

(56) References cited:
- EP-A1- 3 305 843
- EP-A1- 3 404 065
- US-A- 6 024 146
- US-A1- 2007 161 735
- US-A1- 2008 188 592
- US-A1- 2010 036 025
- US-A1- 2010 227 968
- US-A1- 2011 143 066

## Description

### BACKGROUND OF THE INVENTION

### Field of the Invention

This invention relates generally materials useful for tires and more particularly to rubber compositions useful for tire inner liners.

### Description of the Related Art

Pneumatic tires are constructed to hold their inflation gas, such as air, nitrogen or other gases, under pressure. Typically pneumatic tires include an inner liner that is specifically designed to be more impervious to inflation gas flow than the other parts of the tire. The inner liner is installed on the inside surface of the tire and is designed to minimize the amount of inflation gas that can pass through it.

Without the inner liner, the inflation gas would pass more easily through the tire since the tire is slightly permeable to gases. If left unchecked, the gas permeability of the tire may compromise its performance and cause it to deflate over time. Furthermore, if the gas that passes through the slightly permeable material is oxygen, then the oxygen can cause oxidation of the elastomers, causing deleterious effects to the properties of the elastomer, *e.g*., the elastomers may tend to harden and degrade.

Typically inner liners are formed from a rubber composition that includes a butyl rubber, a copolymer of isobutylene and isoprene. Such compositions are described, for example, in US 2010/036025, US 2010/227968, EP 3 305 843, US 2008/188592, US 2007/161735, EP 3 404 065, US 20111143066 and US 6.024.146. Butyl rubber in its raw state, however, still remains somewhat gas permeable so efforts continue to improve the inner liner to limit its permeability to the inflation gas as well as remain suitable for a wide range of operating environments, e.g., cold weather climates.

### DETAILED DESCRIPTION OF PARTICULAR EMBODIMENTS

Reference will now be made in detail to embodiments of the invention. Each example is provided by way of explanation of the invention. For example, features illustrated or described as part of one embodiment can be used with another embodiment to yield still a third embodiment. It is intended that the present invention include these and other modifications and variations.

Particular embodiments of the present invention include rubber compositions and articles made from such rubber compositions including, for example, inner liners for pneumatic tires. The rubber compositions useful for forming inner liners as disclosed herein include, *inter alia,* a butyl rubber, a polybutadiene rubber and optionally a natural rubber along with a plasticizing resin having a high glass transition temperature, *e.g.,* at least 25 °C. It has been found that the combination of these materials prevents the problem of cold cracking when the tire is operated in a cold climate where the temperature can reach well below -20 °C, as well as minimizing the permeation of the inflation gas through the material.

Cold cracking is the phenomenon of the inner liner cracking as the tire rolls and flexes the inner liner. Each time the inner liner enters and leaves the tire contact patch the inner liner is flexed. If the inner liner becomes too rigid at its operating temperature, then the inner liner will form cracks that destroy the inflation gas permeation barrier and allow the gas to diffuse through the rest of the tire.

A useful indicator of whether a particular rubber composition is able to resist cold cracking in cold weather environments is the dynamic shear modulus G* at -40 °C as determined in accordance with ASTM D5992. Particular embodiments of the rubber compositions disclosed herein have such a shear modulus that is less than 170 MPa or alternatively, less than 160 MPa, less than 155 MPa, less than 150 MPa or less than 140 MPa.

With the ability to withstand cold cracking in cold weather environments, it is also important that the rubber composition maintain adequate impermeability to inflation gas. Therefore particular embodiments of the rubber compositions disclosed herein further may be described as having an oxygen permeability (mm cc) / (m² day) as determined in accordance with ASTM D3985 of less than 165 (mm cc) / (m² day) or alternatively, less than 160 (mm cc) / (m² day), less than 150 (mm cc) / (m² day), less than 145 (mm cc) / (m² day), or less than 140 (mm cc) / (m² day).

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

As noted above, particular embodiments of the rubber compositions disclosed herein include a butyl rubber, a polybutadiene rubber and optionally a natural rubber component. Butyl rubber is often used for inner liners and inner tubes in pneumatic tires because of its low permeability characteristic, *i.e.,* it can significantly reduce the amount of inflation gases that pass through the barrier layer over a period of time. Butyl rubber is a copolymer of isobutylene with small amounts of isoprene. Typically butyl rubber comprises more than 90 mole percent of isobutylene derived units and less than 10 mole percent of isoprene derived units.

Butyl rubber is also useful in its halogenated form. Halogenated butyl rubber may include, for example, a chlorobutyl rubber or a bromobutyl rubber. Halogenated butyl rubbers are well known in the industry and are produced by reacting chlorine or bromine with a butyl rubber in a continuous process. Bromobutyl and chlorobutyl rubbers are available, for example, from Lanxess with offices in Fairlawn, Ohio.

In addition to the butyl rubber, particular embodiments of the rubber compositions disclosed herein include a polybutadiene rubber. Polybutadiene rubber is a well-known rubber that is made by polymerizing the 1,3-butadiene monomer (typically homopolymerization) in a solution polymerization process using suitable catalysts as known to those skilled in the art. Because of the two double bonds present in the butadiene monomer, the resulting polybutadiene may include three different forms: *cis-*1,4*, trans-*1,4 and *vinyl-*1,2 polybutadiene. The *cis-*1,4 and *trans-*1,4 elastomers are formed by the monomers connecting end-to-end while the *vinyl*-1,2 elastomer is formed by the monomers connecting between the ends of the monomer. The catalyst selection and the temperature of the process are known as the variables typically used to control the *cis-*1,4 bond content of the polybutadiene.

While not limiting the invention, examples of useful polybutadienes include those having a content of 1,2- units of between 4 mol. % and 80 mol. % or those having a *cis-*1,4 content of more than 80 mol. % or alternatively, greater than 90 mol.% or greater than 95 mol.%.

As noted above, in addition to the butyl rubber and the polybutadiene rubber, particular embodiments of the rubber compositions disclosed herein may include natural rubber and/or synthetic polyisoprene rubber. The polyisoprene rubber may be added to improve the tack of the rubber composition. Particular embodiments are limited to only the use of natural rubber, excluding synthetic polyisoprene. The use of natural rubber may provide improved tackiness over the use of synthetic polyisoprene.

The amount of butyl rubber contained in particular embodiments of the rubber compositions disclosed herein may be between 80 phr and 98 phr of the butyl rubber or alternatively, between 85 phr and 98 phr, between 85 phr and 95 phr or between 88 phr and 92 phr of the butyl rubber.

The amount of polybutadiene rubber contained in particular embodiments may be between 0.5 phr and 15 phr or alternatively between 1 phr and 12 phr, between 1 phr and 10 phr, between 1 phr and 5 phr, between 2 phr and 12 phr, between 2 phr and 10 phr or between 2 phr and 5 phr of the polybutadiene rubber.

The amount of polyisoprene rubber, either as natural rubber, synthetic polyisoprene rubber or combinations thereof may be between 0 phr and 20 phr of polyisoprene rubber or alternatively between 0 phr and 15 phr, between 0 phr and 10 phr, between 1 phr and 15 phr, between 1 phr and 10 phr or between 4 phr and 10 phr of polyisoprene rubber. Particular embodiments may include no polyisoprene rubber.

Particular embodiments of the rubber compositions disclosed herein may be limited only to the three rubber components listed above, *i.e.,* the butyl, polybutadiene and polyisoprene rubbers. However other embodiments may include other rubber components such as, for example, replacing at least a portion or all of the butyl rubber with a brominated isobutylene paramethyl styrene (BIMS) polymer, a well-known polymer used in inner liners and having excellent impermeability properties.

In addition to the rubber components discussed above, particular embodiments of the rubber compositions disclosed herein further include a platy filler. The platy filler is useful for increasing the impermeability properties of the material.

Examples of platy fillers include silicates, such as phyllosilicates, smectite and vermiculite clay minerals and various other clay materials. Particular examples include kaolin, montmorillonite such as sodium montmorillonite, magnesium montmorillonite, and calcium montmorillonite, nontronite, beidellite, volkonskoite, hectorite, laponite, sauconite, sobockite, stevensite, svinfordite, vermiculite, mica, bentonite, sepeolite, saponite, and the like. Other materials that may be used include micaceous minerals such as illite and mixed layered illite/smectite minerals, such as ledikite and admixtures of illites and the clay minerals described above. Many of these and other layered clays generally comprise particles containing a plurality of silicate platelets having a thickness of 8-12 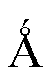 tightly bound together at interlayer spacings of 4 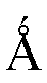 or less, and contain exchangeable cations such as Na⁺, Ca⁺², K⁺ or Mg⁺² present at the interlayer surfaces.

The layered platy fillers, such as clay, can be exfoliated by suspending the platy filler in a water solution. As used herein, "exfoliation" refers to the separation of individual layers of the original inorganic particle, so that polymer can surround or surrounds each particle. In an embodiment, sufficient polymer is present between each platelet such that the platelets are randomly spaced. For example, some indication of exfoliation or intercalation may be a plot showing no X-ray lines or larger d-spacing because of the random spacing or increased separation of layered platelets. However, as recognized in the industry and by academia, other indicia may be useful to indicate the results of exfoliation such as permeability testing, electron microscopy and atomic force microscopy.

Preferably, when exfoliating the layered clays, the concentration of clay in water is sufficiently low to minimize the interaction between clay particles and to fully exfoliate the clay. In one embodiment, the aqueous slurry of clay can have a clay concentration of between 0.1 and 5.0 weight percent or alternatively, between 0.1 and 3.0 weight percent. Organoclays can be obtained by using an organic exfoliating agent such as, for example, tertiary amines, diamines, polyamines, amine salts, as well as quaternary ammonium compounds. Exemplary organoclays are available commercially from Southern Clay Products under the trade names CLOISITE 6A, 15A, and 20A, which are natural montmorillonite clays modified with quaternary ammonium salts. CLOISITE 6A, for example, contains 140 meq/100 g clay of dimethyl dihydrogenated tallow quaternary ammonium salts.

In addition to dimethyl-dihydrogenated tallow-quaternary ammonium salts, clays may also be organically modified, for example, with an octadecylamine or a methyl-tallow-bis-2-hydroxyethyl quaternary ammonium salt. Still other examples of useful surfactants that may be used to modify the particles include dimethyl ditallow ammonium, dipolyoxyethylene alkyl methyl ammonium, trioctyl methyl ammonium, polyoxypropylene methyl diethyl ammonium, dimethyl benzyl hydrogenated tallow quaternary ammonium, dimethyl hydrogenated tallow 2-ethylhexyl quaternary ammonium, methyl dihydrogenated tallow ammonium, and the like.

Particular embodiments of the rubber composition disclosed herein include platy fillers such as clay or exfoliated clay that have been organically modified, those that have not been organically modified and combinations thereof. The amount of platy filler incorporated into the rubber composition in accordance with this invention depends generally on the particular particles selected and the materials with which they are mixed. Generally an amount is added that is sufficient to develop an improvement in the mechanical properties or barrier properties of the rubber composition, e.g., tensile strength or oxygen permeability.

For example, the platy fillers may be present in the composition in an amount of between 1 phr and 40 phr or alternatively between 1 phr and 35 phr, between 1 phr and 25 phr, between 5 phr and 35 phr, between 10 phr and 35 phr, between 20 phr and 40 phr, between 20 phr and 35 phr or between 20 phr and 30 phr. Such total amounts of platy filler may include just the organically modified filler (such as an organoclay), just the non-organically modified filler or mixtures thereof.

In addition to the platy fillers, carbon black and/or silica may also be incorporated as a reinforcing filler into particular embodiments of the rubber composition disclosed herein in quantities sufficient to provide the desired physical properties of the material, e.g., modulus and cohesion. In an embodiment, the silica is a highly dispersible precipitated silica but other silicas may also be used in other embodiments. Such amounts may include, for example, between 10 phr and 100 phr of carbon black and/or silica or alternatively, between 5 phr and 75 phr, between 15 phr and 50 phr, between 15 phr and 35 phr or between 20 phr and 30 phr of carbon black and/or silica. Particular embodiments may limit the reinforcing filler to just carbon black or alternatively, to just silica.

Non-limiting examples of useful carbon blacks may include N550, N650, N660, N762, N772 and N990, singly or in combination. Non-limiting examples of useful silica include Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber, singly or in combination.

In addition to the rubber components, the platy filler and the reinforcing fillers described above, particular embodiments of the rubber compositions disclosed herein further include a high glass transition plasticizing resin. The plasticizing resin may provide both an improvement to the processability of the rubber mix and/or a means for adjusting the rubber compositions glass transition temperature or/or its rigidity.

A plasticizing hydrocarbon resin is a hydrocarbon compound that is solid at ambient temperature (*e.g.,* 23 °C) as opposed to a liquid plasticizing compound, such as a plasticizing oil.

Plasticizing hydrocarbon resins are polymers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of Cs cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ Cs cut, of terpene/ vinyl-aromatic, of Cs cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a Cs to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, Cs cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 and sold by DRT of France. Resin R2495 has a molecular weight of about 932, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125° C, and has a glass transition temperature of about 73°C while the SYLVARES TR 5147 has a molecular weight of about 945, a softening point of about 120 °C and has a glass transition temperature of about 71° C.

Other suitable plasticizing hydrocarbon resins that are commercially available include Cs cut/ vinyl-aromatic styrene copolymer, notably Cs cut / styrene or Cs cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373.

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DCS) in accordance with ASTM D3418

(1999). In particular embodiments, useful resins may be have a glass transition temperature that is at least 25° C or alternatively, at least 40° C or at least 60° C or between 25° C and 95° C, between 40° C and 85° C or between 60° C and 80° C.

The amount of plasticizing hydrocarbon resin useful in any particular embodiment of the present invention depends upon the particular circumstances and the desired result. The plasticizing hydrocarbon resin may be present in the rubber composition in an amount of, for example, between 1 phr and 10 phr or alternatively, between 2 phr and 10 phr, 2 phr and 8 phr, 2 phr and 6 phr or between 4 phr and 8 phr.

The rubber compositions disclosed herein can be cured with a sulfur based curing system that typically includes sulfur and an accelerator. Alternatively, in particular embodiments, other curing systems may be used such as, for example, a peroxide based curing system. Suitable free sulfur includes, for example, pulverized sulfur, rubber maker's sulfur, commercial sulfur, and insoluble sulfur. The amount of free sulfur included in the rubber composition may range between 0.5 and 3 phr or alternatively between 0.8 and 2.5 phr or between 1 and 2 phr.

Use may be made of any compound capable of acting as curing accelerator in the presence of sulfur, in particular those chosen from the group consisting of 2-2'-dithio bis(benzothiazole) (MBTS), diphenyl guanidine (DPG), N-cyclohexyl-2-benzothiazole-sulphenamide (CBS), N,N-dicyclohexyl-2-benzothiazolesulphenamide (DCBS), N-tert-butyl-2-benzo-thiazole-sulphenamide (TBBS), N-tert-butyl-2-benzothiazolesulphen-imide (TBSI) and the mixtures of these compounds.

Other additives can be added to the rubber composition disclosed herein as known in the art. Such additives may include, for example, some or all of the following: antidegradants, antioxidants, fatty acids, pigments, waxes, stearic acid, zinc oxide and accelerators. Examples of antidegradants and antioxidants include 6PPD, 77PD, IPPD and TMQ and may be added to rubber compositions in an amount of from 0.5 phr and 5 phr. Zinc oxide and/or stearic acid may be added as part of the curing system activator in an amount of between 1 phr and 6 phr, 1 phr and 4 phr or between 1 phr and 3 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 80° C and 145° C, more narrowly between 130° C and 140° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature lower than the vulcanization temperature of the mixture, so as to protect against premature vulcanization.

The rubber compositions can then be formed into useful articles, including tire components such as the inner liner, and cured.

The invention is further illustrated by the following examples, which are to be regarded only as illustrations and not delimitative of the invention in any way. The properties of the compositions disclosed in the examples were evaluated as disclosed below.

Oxygen permeability (mm cc) / (m² day) was measured using a MOCON OX-TRAN 2/60 permeability tester at 40°C in accordance with ASTM D3985. Cured sample disks of measured thickness (approximately 0.8-1.0 mm) were mounted on the instrument and sealed with vacuum grease. Nitrogen (with 2% H₂) flow was established at 10 cc/min on one side of the disk and oxygen (10% O₂, remaining N₂) flow was established at 20 cc/min on the other side. Using a Coulox oxygen detector on the nitrogen side, the increase in oxygen concentration was monitored. The time required for oxygen to permeate through the disk and for the oxygen concentration on the nitrogen side to reach a constant value, was recorded along with the barometric pressure and used to determine the oxygen permeability, which is the product of the oxygen permeance and the thickness of the sample disk in accordance with ASTM D3985.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.1 MPa and at a frequency of 10 Hz over a temperature sweep from -60° C to 100° C with the temperature increasing at a rate of 1.5° C/min. The shear modulus G* at -40° C was captured and the temperature at which the max tan delta occurred was recorded as the glass transition temperature, Tg.

### Example 1

Rubber compositions were prepared using the components shown in Table 1. The amount of each component making up these rubber compositions are provided in parts per hundred parts of rubber by weight (phr). The bromobutyl rubber was Exxon Bromobutyl 2222 with 2 wt% bromine. The BR had a cis content of greater than 95% and a glass transition temperature of -108 °C.

The kaolin clay (china clay) was NKPL GP1 white, dry milled clay. Escorez 1102 is an aliphatic hydrocarbon resin available from ExxonMobil with a glass transition temperature of 52 °C and a number average molecular weight of 1300 g/mole. The Oppera 373N resin was from ExxonMobil and was a C5-C9 resin with a glass transition temperature of about 40 °C and a number average molecular weight of around 820 g/mole. The OPFT resin was an octylphenol formaldehyde resin from SI Group Bethune S.A.S., France having a glass transition temperature of 40 °C.

**Table 1 - Rubber Formulations with Physical Properties**

| **Composition** | **W1** | **W2** | **F1** | **F2** | **F3** |
|---|---|---|---|---|---|
| NR | 10 | 0 | 8 | 0 | 6 |
| Br-Butvl Rubber | 90 | 100 | 90 | 90 | 90 |
| BR | 0 | 0 | 2 | 10 | 4 |
| N772 | 34 | 40 | 32 | 32 | 34 |
| Kaolin | 24 | 24 | 24 | 24 | 24 |
| Escorez 1102 | 2 | 0 | 2 | 2 | 2 |
| Oppera PR 373N | 4 | 10 | 4 | 4 | 4 |
| Resin OPFT | 0 | 2.5 | 0 | 0 | 0 |
| CTP - Vul Inhibitor | 0.2 | 0 | 0.2 | 0.2 | 0.2 |
| Stearic Acid | 1.5 | 1.5 | 1.5 | 1.5 | 1.5 |
| Zinc Oxide | 1.5 | 1.5 | 1.5 | 1.5 | 1.5 |
| Acc | 1.2 | 1.2 | 1.2 | 1.2 | 1.2 |
| S | 1.5 | 1.5 | 1.5 | 1.5 | 1.5 |
| | | | | | |

| **Physical Properties** | | | | | |
|---|---|---|---|---|---|
| G* -40°C, MPa | 185 | 224 | 152 | 135 | 165 |
| Tg | -25 | -16 | -25 | -25 | -25 |
| Oxygen Permeability, (mm cc) / (m² day) | 134.5 | 117.1 | 131.3 | 158.1 | 145.3 |

The components of each of the formulations were mixed in a Banbury mixer at 65 RPM until a temperature of between 130 °C and 135 °C was reached. Vulcanization was effected at 150 °C for 40 minutes. The cured formulations were then tested to measure their physical properties.

As demonstrated by F1-F3, the addition of the BR significantly reduced the shear modulus G* -40 °C indicating a reduced propensity to cold cracking without a severe increase in the oxygen permeability. The addition of the resin and clay improved the oxygen permeability property (reduced it) and maintained a targeted glass transition temperature with the addition of the BR.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. A tire comprising an inner liner, the inner liner comprising a rubber composition based upon a cross-linkable rubber composition, the cross-linkable rubber composition comprising, per 100 parts by weight of rubber:
a rubber component comprising between 80 phr and 98 phr of a butyl rubber, between 0.5 phr and 15 phr of a polybutadiene rubber and between 0 phr and 20 phr of a polyisoprene;
between 1 phr and 10 phr of a plasticizing resin having a glass transition temperature of at least 25 °C;
between 1 phr and 40 phr of a platy filler; and
a curing system.

2. The tire of claim 1, wherein the rubber component includes no other elastomer other than the butyl, polybutadiene and polyisoprene rubbers.

3. The tire of claim 1 or 2, wherein the butyl rubber is a halogenated butyl rubber.

4. The tire of any of the preceding claims, wherein the polyisoprene is natural rubber.

5. The tire of any of the preceding claims, wherein the rubber component comprises between 85 phr and 95 phr of a butyl rubber, between 1 phr and 12 phr of a polybutadiene rubber and between 0 phr and 10 phr of a polyisoprene, wherein the polyisoprene is natural rubber.

6. The tire of any of the preceding claims, wherein the platy filler is a kaolin clay.

7. The tire of claim 6, wherein the cross-linkable rubber composition comprises between 20 phr and 40 phr of the kaolin clay.

8. The tire of any of the preceding claims, wherein the cross-linkable rubber composition comprises between 2 phr and 8 phr of the plasticizing resin.

9. The tire of any of the preceding claims, wherein the cure system is a sulfur based cure system.

## Patentansprüche

1. Reifen mit einer Innenauskleidung, wobei die Innenauskleidung eine Kautschukzusammensetzung umfasst, die auf einer vernetzbaren Kautschukzusammensetzung basiert, wobei die vernetzbare Kautschukzusammensetzung pro 100 Gewichtsteile Kautschuk Folgendes umfasst:
eine Kautschukkomponente, die zwischen 80 phr und 98 phr eines Butylkautschuks, zwischen 0,5 phr und 15 phr eines Polybutadienkautschuks und zwischen 0 phr und 20 phr eines Polyisoprens umfasst;
zwischen 1 phr und 10 phr eines weichmachenden Harzes mit einer Glasübergangstemperatur von mindestens 25 °C;
zwischen 1 phr und 40 phr eines plättchenförmigen Füllstoffs; und
ein Härtungssystem.

2. Reifen nach Anspruch 1, wobei die Kautschukkomponente kein anderes Elastomer als die Butyl-, Polybutadien- und Polyisoprenkautschuke enthält.

3. Reifen nach Anspruch 1 oder 2, wobei es sich bei dem Butylkautschuk um einen halogenierten Butylkautschuk handelt.

4. Reifen nach einem der vorhergehenden Ansprüche, wobei es sich bei dem Polyisopren um Naturkautschuk handelt.

5. Reifen nach einem der vorhergehenden Ansprüche, wobei die Kautschukkomponente zwischen 85 phr und 95 phr eines Butylkautschuks, zwischen 1 phr und 12 phr eines Polybutadienkautschuks und zwischen 0 phr und 10 phr eines Polyisoprens umfasst, wobei es sich bei dem Polyisopren um Naturkautschuk handelt.

6. Reifen nach einem der vorhergehenden Ansprüche, wobei es sich bei dem plättchenförmigen Füllstoff um einen Kaolinton handelt.

7. Reifen nach Anspruch 6, wobei die vernetzbare Kautschukzusammensetzung zwischen 20 phr und 40 phr des Kaolintons umfasst.

8. Reifen nach einem der vorhergehenden Ansprüche, wobei die vernetzbare Kautschukzusammensetzung zwischen 2 phr und 8 phr des weichmachenden Harzes umfasst.

9. Reifen nach einem der vorhergehenden Ansprüche, wobei das Härtungssystem ein schwefelbasiertes Härtungssystem ist.

## Revendications

1. Pneu comprenant un revêtement intérieur, le revêtement intérieur comprenant une composition de caoutchouc sur la base d'une composition de caoutchouc réticulable, la composition de caoutchouc réticulable comprenant, pour 100 parties en poids de caoutchouc :
un composant caoutchouc comprenant entre 80 pce et 98 pce d'un caoutchouc butyle, entre 0,5 pce et 15 pce d'un caoutchouc polybutadiène et entre 0 pce et 20 pce d'un polyisoprène ;
entre 1 pce et 10 pce d'une résine plastifiante présentant une température de transition vitreuse d'au moins 25 °C ;
entre 1 pce et 40 pce d'une charge lamellaire ; et
un système de durcissement.

2. Pneu selon la revendication 1, dans lequel le composant en caoutchouc ne comporte aucun autre élastomère que les caoutchoucs butyle, polybutadiène et polyisoprène.

3. Pneu selon la revendication 1 ou 2, dans lequel le caoutchouc butyle est un caoutchouc butyle halogéné.

4. Pneu selon l'une quelconque des revendications précédentes, dans lequel le polyisoprène est du caoutchouc naturel.

5. Pneu selon l'une quelconque des revendications précédentes, dans lequel le composant caoutchouc comprend entre 85 pce et 95 pce d'un caoutchouc butyle, entre 1 pce et 12 pce d'un caoutchouc polybutadiène et entre 0 pce et 10 pce d'un polyisoprène, dans lequel le polyisoprène est du caoutchouc naturel.

6. Pneu selon l'une quelconque des revendications précédentes, dans lequel la charge lamellaire est de l'argile de kaolin.

7. Pneu selon la revendication 6, dans lequel la composition de caoutchouc réticulable comprend entre 20 pce et 40 pce de l'argile de kaolin.

8. Pneu selon l'une quelconque des revendications précédentes, dans lequel la composition de caoutchouc réticulable comprend entre 2 pce et 8 pce de la résine plastifiante.

9. Pneu selon l'une quelconque des revendications précédentes, dans lequel le système de durcissement est un système de durcissement à base de soufre.
